# NOUVEAU FASCICULE DE BREVET EUROPEEN

(11) **EP 0 441 075 B2**
(45) Date de publication et mention de la décision concernant l'opposition: **03.02.1999**
(45) Mention de la délivrance du brevet: 17.08.1994
(21) Numéro de dépôt: 90403586.2
(22) Date de dépôt: 14.12.1990
(51) Int. Cl.: C03B 33/04, C03B 33/03, B24B 9/10

(54) **Fabrication de vitrages sur une ligne comprenant plusieurs postes de travail**
Herstellung von Glasscheiben auf einer geraden Produktionsstrasse mit mehreren Bearbeitungsstellen
Making glass-sheets on a line comprising several working stations

(30) Priorité: 14.12.1989 DE 3941277
(43) Date de publication de la demande: 14.08.1991
(73) Titulaire: SAINT-GOBAIN VITRAGE, 92400 Courbevoie (FR); VEGLA Vereinigte Glaswerke GmbH, 52066 Aachen (DE)
(72) Inventeur: Elfgen, Ansgar, F-92500 Rueil-Malmaison (FR); Krumm, Helmut, W-5100 Aachen (DE); Henn, Klaus, W-5100 Aachen (DE); Schwartz, Ludwig, W-5100 Aachen (DE)
(74) Mandataire: Muller, René

(56) Documents cités:
- EP-A- 0 217 658
- EP-A- 0 315 202
- DE-A- 2 918 986
- DE-B- 1 297 831
- DE-C- 2 945 682
- FR-A- 2 484 393
- US-A- 3 860 125
- US-A- 4 778 507

## Description

Au sein d'une ligne comprenant plusieurs postes de travail successifs l'invention a trait à un procédé pour la fabrication de vitrages au cours duquel les feuilles de verre, acheminées pas à pas d'un poste au suivant, sont positionnées à chacun d'eux avant mise en oeuvre de l'étape de fabrication intéressée.

Des procédés de ce type trouvent leur utilisation sur des lignes de fabrication courantes de vitrages automobiles; ils sont décrits par exemple par la publication DE-29 45 682 C2. Dans ce cas, la ligne possède un poste de découpe où l'on effectue un tracé sur un primitif rectangulaire, et en aval un poste de rompage ou croquage pour détacher les bandes latérales.

De telles lignes de fabrication comprennent aussi, fréquemment, un poste de meulage des bords du vitrage, et éventuellement un ou plusieurs autres postes, pour exécuter des perçages, mesurer le contour du verre ou porter des inscriptions sur la feuille.

Lors de la fabrication de vitrages feuilletés, d'autres lignes de fabrication ont pour fonction d'assembler les volumes élémentaires ou d'équiper les vitrages déjà terminés d'accessoires tels que cadres, embases de miroirs, pinces de fixation ou autres pièces. Le brevet DE-31 24 172 C2 décrit par exemple un dispositif de mise en place sur un convoyeur horizontal des différentes feuilles à assembler pour fabriquer un vitrage feuilleté.

Sur les lignes connues de fabrication de vitrages, le transport des volumes se fait à l'aide de transporteurs horizontaux où ils reposent sur des bandes, des rouleaux de transport ou d'autres dispositifs analogues. A chaque poste de travail, une mise en place précise des volumes est nécessaire. Elle s'effectue, au moins dans la direction transversale à la ligne de fabrication, à l'aide de butées qui, agissant sur les arêtes des volumes, font glisser ceux-ci sur leur face inférieure jusqu'à la position souhaitée. Il en résulte entre le convoyeur et les volumes une succession de glissements qui peuvent conduire à des détériorations de surface ou même à la rupture des volumes.

Dans les installations de fabrication comprenant plusieurs machines-outils, il est connu de fixer les pièces sur des palettes que l'on échange sur des chariots mobiles entre les différentes machines-outils et des postes de manipulation de palettes (publication DE-27 41 647 A1). Dans ce cas, deux paires de glissières extensibles vers l'extérieur sont disposées sur le chariot mobile transversalement à sa direction de circulation. L'une d'elles reçoit une palette avec la pièce fabriquée d'une machine-outil après exécution de son étape de travail, tandis qu'immédiatement l'autre lui fournit une nouvelle palette avec la pièce à travailler.

Il est encore connu, dans l'automatisation du transport vers des installations d'assemblage et des dispositifs de fabrication, d'installer des blocs de manipulation pour introduire des pièces sur les machines, ce qui permet d'atteindre une grande précision de mise en place (prospectus DE de la firme BOSCH, Bosch Flexible Automation 11.83). On met aussi en place sur de telles installations d'assemblage des montages circulants constitués de modules individuels.

A l'état de la technique appartient encore un système de magasinage de pièces dans lequel les pièces sont transportées pas à pas à travers les installations de fabrication dans des magasins d'où elles sont prélevées et introduites en position convenable sur les machines de fabrication (prospectus DE de la firme SIEMENS, système de magasinage de pièces et de palettes, 1984).

On connaît enfin des automates d'assemblage auxquels des montages porteurs de pièces passent à travers divers postes de montage se déplaçant d'un poste au suivant au furet à mesure de l'exécution des étapes de montage (prospectus DE de la firme OKV, 3, 1989). On se propose ainsi d'obtenir un montage rapide, économique et rationnel de pièces fabriquées en grande série.

Le document DE-A-12 97 831 décrit un procédé et une ligne de fabrication de vitrages où des volumes de verre plans associés par aspiration chacun à un support monté libre sur un châssis mobile sont transportés avec ce dernier à des postes de travail successifs où le support est centré par rapport au poste et où une plaque est appliquée au-dessus du volume serré entre elle et son support pendant que le travail est effectué sur la périphérie du volume.

L'invention a pour objectif de créer un procédé de fabrication de vitrages au sein d'une ligne de fabrication comprenant plusieurs postes de travail successifs qui diminue, voire élimine le risque de détérioration des volumes résultant des étapes multiples de mise en place.

Selon l'invention, cet objectif est atteint grâce au fait que dans un procédé du type précédent, chaque support est un chariot support constituant un unique organe de transport sur lequel le volume reste sans déplacement relatif à travers toute la ligne, le volume reposant sur le support au moins le long du pourtour de ce support, et que, pendant le travail et/ou la manutention, le volume n'est immobilisé que par aspiration sur son chariot support par l'intermédiaire de dispositifs d'aspiration disposés à l'intérieur de ce pourtour.

L'invention a également pour objet un dispositif pour fabriquer des vitrages au sein d'une ligne comportant plusieurs phases de travail, notamment pour la découpe en forme et le meulage de volumes de verre, comprenant successivement plusieurs postes de travail, un système d'acheminement desdits volumes à travers ladite ligne de fabrication qui comporte une série de support mobiles pour prendre en charge lesdits volumes, les supports étant équipés comme moyens pour fixer les volumes par rapport à eux, d'une chambre susceptible d'être mise en dépression pour exercer par des ouvertures une succion sur le volume et de moyens pour centrer ou positionner les volumes par rapport à chacun des postes de travail qu'ils traversent pas à pas, où os supports sont des chariots supports constituant chacun un unique organe de transport sur lequel le volume reste sans déplacement relatif, qui sont équipés de moyens de positionnement du chariot support lui-même à un poste de travail, et qui comportent une surface porteuse s'étendant au moins le long du pourtour du volume et à l'intérieur de laquelle débouchent lesdites ouvertures.

Avantageusement, en particulier pour la découpe en forme et le meulage de volumes de verre, chaque support possède une plaque porteuse plane de surface plus petite que celle des volumes de sorte que leur zone marginale à traiter déborde à l'extérieur.

Egalement, notamment pour le travail ou la manutention de volumes de verre bombés, le support possède un cadre porteur adapté à la forme d'un volume et les moyens pour fixer les volumes sont constitués de ventouses placées à l'intérieur du cadre.

L'invention permet, sans difficulté, de superposer les postes de travail ou de disposer une partie de la ligne de fabrication selon un angle déterminé par rapport à l'autre partie de cette ligne. Enfin constitue encore un avantage le fait qu'une identification convenable des différents montages autorise sans aucun problème à suivre les volumes pendant le processus de fabrication pour surveiller la qualité.

En règle générale, il est recommandé de placer les volumes en position horizontale sur des montages placés horizontalement. Bien entendu, il reste cependant possible en soi de les fixer sur le support de toute façon souhaitée, choisie au cas par cas en fonction de la disposition et des modes de travail des divers organes de fabrication dans les postes de travail.

Le procédé selon l'invention est particulièrement avantageux dans tous les cas où une table de support n'est pas nécessaire à chacun des postes de fabrication, comme par exemple pour la découpe par effet thermique ou pour le meulage des arêtes. Lorsqu'une telle table est nécessaire, il faut prévoir des dispositifs correspondants aptes à supporter le bord des volumes.

D'autres avantages et modes de mise en oeuvre intéressants, et des développements de l'invention ressortent des revendications et d'exemples de sa mise en oeuvre décrits ci-dessous en référence aux dessins.

Ces dessins montrent :
figure 1 : une vue d'ensemble en perspective d'une ligne de fabrication apte à la mise en oeuvre du procédé de l'invention,
figure 2 : à plus grande échelle, la structure d'un poste de découpe,
figure 3 : un support comprenant un plateau porteur plan et des dispositifs d'aspiration à commande mécanique,
figure 4 : un support mobile comprenant un plateau porteur plan et des dispositifs d'aspiration à commande pneumatique,
figure 5 : un support mobile comprenant un cadre pour une feuille de verre bombée,
figure 6 : une forme d'exécution pour le centrage mécanique du support sur un poste de travail.

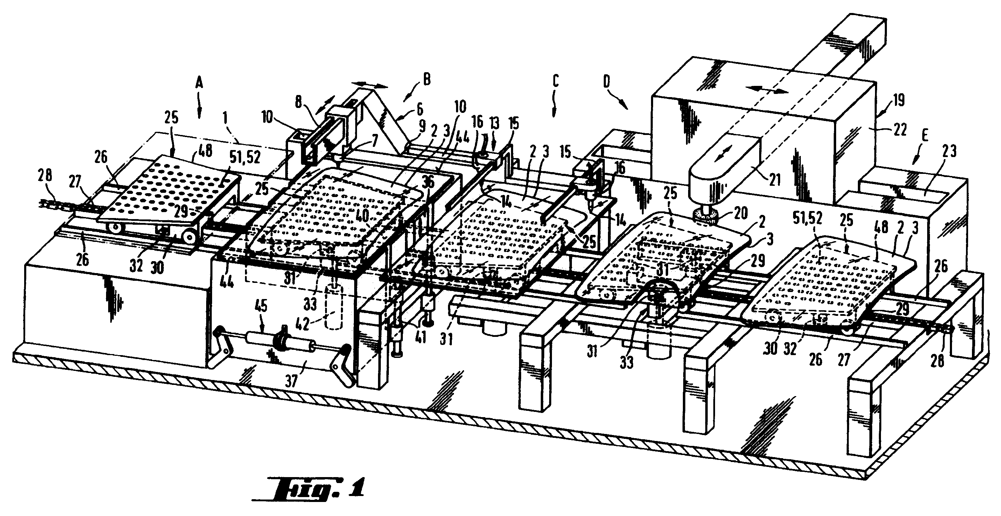

La ligne de fabrication d'un volume de verre à transformer en vitrage automobile que représente la figure 1 comprend un poste de chargement A, un poste de découpe en forme B, un poste de croquage des bords C, un poste de meulage des arêtes D et un poste de déchargement E. Sur cette ligne de travail, des primitifs rectangulaires 1 sont découpés en des volumes de verre 2 de contour déterminé 3 et meulés le long de ce contour. Au poste de déchargement E les volumes ainsi façonnés 2 sont extraits de la ligne de travail et par exemple empilés dans un magasin intermédiaire ou transférés à une ligne de fabrication où le cas échéant, une étape de travail complémentaire sera exécutée.

Dans le cas représenté, les divers postes de travail sont placés au même espacement, chacun effectuant en même temps sa propre opération, ce qui signifie qu'à chaque poste se trouve un volume. Aussitôt que sur tous les postes le processus de chargement, de déchargement ou l'étape de fabrication sont achevés, tous les volumes sont déplacés en même temps vers le poste suivant. C'est ainsi que la ligne de fabrication dans son ensemble est utilisée de façon optimale.

Il est possible d'employer pour machines de fabrication des machines usuelles. Dans le cas représenté, la machine de découpe en forme 6 par exemple est une machine de découpe à chariots en croix à commande numérique dont la tête de découpe 7 se déplace sur un pont 8 et ce pont sur un banc 9 le long de glissières 1O, l'un et l'autre selon le programme de découpe. Entraîné par la machine 6, l'outil de découpe reporte ainsi sur le volume 1 le contour 3 correspondant à ce programme de découpe.

La machine de croquage des bords représentée en 13 au poste de croquage C comprend par exemple, disposés dans les angles au-dessus du primitif 1, sur une poutrelle de maintien 15, quatre brûleurs à gaz 16 dirigeant leurs flammes 14 vers les bords à détacher de celui-ci, les réchauffant localement là où ils se trouvent et y provoquant de fortes tensions thermiques, de sorte que ces bords se brisent et se détachent du vitrage 2 à l'extérieur du contour 3. Les débris sont évacués de façon appropriée.

Au poste de meulage des arêtes D est représenté un automate de meulage 19 à commande numérique ayant également la structure d'une machine à chariots en croix. La meule 20 est montée sur un chariot 21 qui se déplace transversalement à l'axe de la ligne de fabrication selon le programme de meulage. Le chariot 21 est porté par un traînard 22, qui pour sa part, se déplace de même sur des glissières 23 selon la direction longitudinale de la ligne de fabrication.

Pour transporter les vitrages au sein de la ligne de fabrication, les mettre en place et les maintenir dans une position déterminée aux différents postes de travail, on utilise des chariots supports 25 qui circulent sur des rails 26 à travers les postes de travail où ils sont positionnés. Pour mouvoir ces chariots 25, il existe dans le cas représenté une chaîne d'entraînement 28 qui glisse sur un chemin 27, et sur laquelle entrent en prise des griffes d'entraînement 29 appartenant à chacun d'eux. Tous sont ainsi transportés pas à pas à chacun des postes de travail.

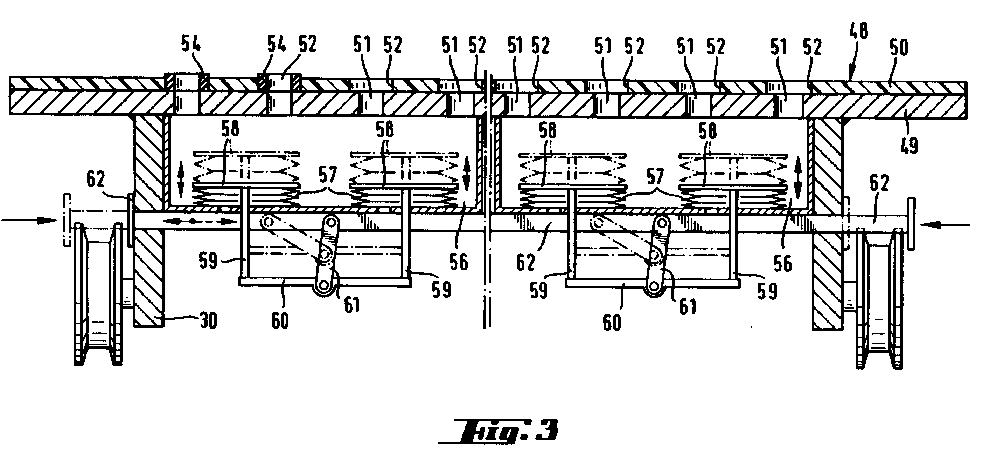

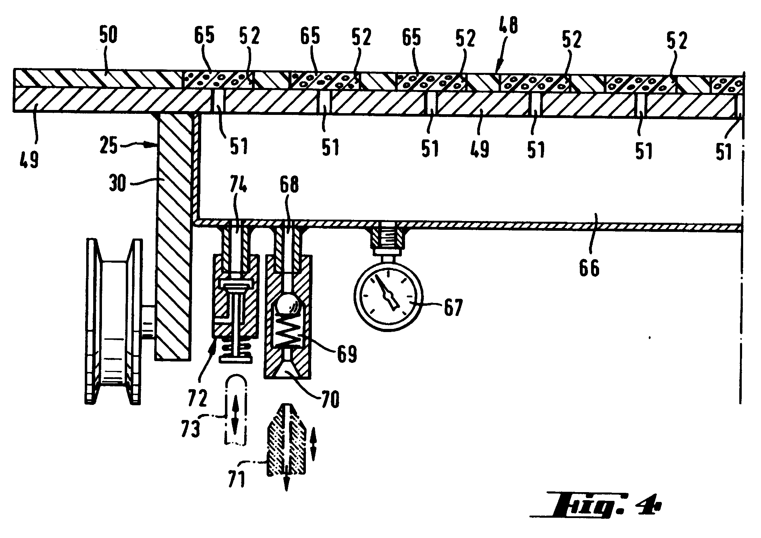

Chaque chariot support 25 comporte une ou plusieurs faces porteuses destinées à recevoir les volumes et possède en outre un dispositif d'aspiration à l'aide duquel ces volumes sont solidement maintenus au contact de ces faces porteuses. Différentes possibilités d'exécution de la surface porteuse et des dispositifs d'aspiration sont décrites plus loin en liaison avec les figures 3 et 4.

Sur la ligne de travail représentée à la figure 1, à la station de chargement A où les primitifs rectangulaires sont en principe déposés sur les chariots supports 25, un positionnement précis des feuilles de verre 1 sur ces chariots est inutile, car la zone marginale des vitrages sera détachée aux deux postes de travail suivants.

Dans le cas cependant où, par exemple dans une ligne d'assemblage pour la fabrication de vitrages feuilletés, différentes feuilles de verre ayant chacune sa propre forme finale doivent être superposées, il faut positionner avec précision le vitrage 1 par rapport au chariot support 25 à la station de chargement A, avant de le fixer sur celui-ci par mise en oeuvre des dispositifs d'aspiration. S'y prêtent des organes de positionnement usuels, qui ne seront pas décrits dans le cas présent.

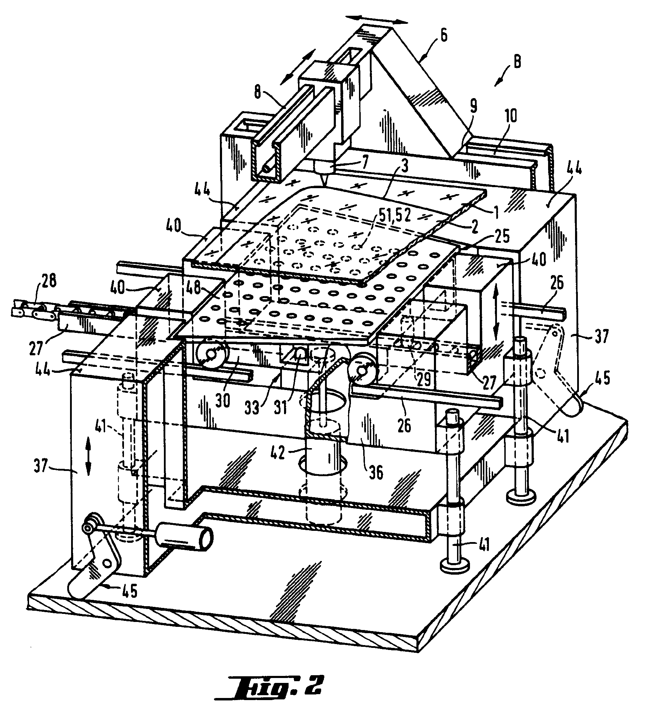

Aux différents postes de travail B, C et D, un positionnement précis des volumes par rapport à chacun de leurs outils de travail est conseillé, ou même, par exemple dans le cas de la machine D de meulage des bords, est absolument indispensable. Dans ce but, les chariots supports 25 sont eux-mêmes centrés ou positionnés par rapport à chacun des postes de travail. Les figures 1 et 2 représentent schématiquement des dispositifs de centrage correspondants 33, équipés de piges de centrage 31, qui pénètrent dans des alésages de centrage 32 correspondants des chariots 25.

Quand les volumes ont traversé tous les postes de travail, ils sont extraits des chariots supports 25 à l'extrémité de la ligne, au poste de déchargement E. A cette fin, on prévoit à ce poste de déchargement E des dispositifs automatiques de commande, pour supprimer la dépression dans les dispositifs d'aspiration des chariots ; les vitrages peuvent ainsi être séparés des surfaces porteuses de ces derniers qui retournent aussitôt, en circuit fermé, à leur position de départ, où ils sont disponibles pour le transport d'une nouvelle feuille de verre à travers la ligne de fabrication.

De façon à pouvoir travailler les bords des volumes de verre, la surface porteuse des chariots supports 25 destinée à supporter lesdits volumes est plus petite que celle de ces derniers, de sorte que leur zone marginale à traiter déborde à l'extérieur. Comme au poste de découpe B, l'outil de découpe exerce sur cette zone marginale une force verticale, elle doit y recevoir un soutien.

Un dispositif adapté à cette fin est montré à la figure 2. Il comprend une table élévatrice constituée de deux parties supportées indépendamment l'une de l'autre, à savoir une partie interne 36 et une partie externe 37. La partie interne 36 de la table de découpe possède une face porteuse 40 qui supporte les vitrages dans les zones proches de l'axe du poste de découpe, et en particulier dans un domaine qui correspond à la largeur du châssis 30 du chariot support 25. Cette partie interne 36 de la table de découpe est guidée sur des colonnes de guidage 41 verticales et mue par un dispositif élévateur 42. Dans la position supérieure, au travail, le bord du volume repose sur la face porteuse 40. Dans la position inférieure, au repos, la partie interne 36, avec sa face porteuse 40, s'efface assez pour que le châssis 30 du chariot support 25 puisse traverser le poste de découpe.

La partie externe 37 de la table de découpe présente deux faces d'appui 44 et peut également s'élever à l'aide d'un organe à excentrique 45 dans une position de travail supérieure ou descendre dans une position de repos inférieure. L'amplitude de la course de cette partie externe 37 de la table de découpe est nettement plus faible que celle de la course de la partie interne 36. Comme précisément la partie externe 37 se situe à l'extérieur du gabarit de déplacement du châssis 30 du chariot support 25, elle ne demande à être déplacée verticalement que de manière insignifiante, pour que les zones du volume qui débordent latéralement au-dessus du chariot ne soient pas empêchées de passer pendant le déplacement de ce dernier.

Sur la partie interne 36 de la table de découpe est disposé l'organe de centrage 80, dont la pige de centrage 81 pénètre dans l'alésage de centrage correspondant du châssis 30 du chariot porteur 25 lors de la remontée de cette partie interne 36, et assure le centrage précis du chariot 25 donc la mise en place précise du volume.

Les chariots supports 25 peuvent, comme le font ressortir les figures 3 et 4, présenter différentes structures. Avantageusement, on dispose sur chaque châssis mobile 30 une plaque porteuse de grande surface 48, qui supporte largement les volumes et les empêche ainsi de fléchir de façon indésirable.

C'est particulièrement avantageux lors du travail de feuilles de verre relativement minces ; pour des volumes relativement épais, il peut suffire dans certaines circonstances de faire reposer les feuilles uniquement sur des ventouses épaisses par lesquelles elles seront maintenues en même temps. La plaque porteuse 48 de grande surface est en tout cas de dimensions inférieures à celles du volume de verre à transporter à travers la ligne de fabrication.

La plaque porteuse 48 comprend une plaque métallique 49 revêtue d'une couche élastique 50, par exemple constituée d'un matériau élastomère. Dans ces deux plaques sont prévues une série d'ouvertures 51 et 52 en relation avec la chambre 56 qu'il est possible de mettre en dépression. La couche élastique 50 rend les ouvertures 51 étanches par rapport aux feuilles de verre qui reposent sur la surface porteuse 50. Si l'élasticité du matériau de la couche 50 n'est pas suffisante pour garantir une bonne étanchéité, il est possible de disposer à l'intérieur des ouvertures 52 des anneaux d'étanchéité 54 constitués d'un matériau élastique plus mou.

Dans le mode d'exécution du chariot support représenté à la figure 3, la dépression nécessaire pour fixer les volumes est obtenue au poste de chargement A par voie mécanique. Chaque chariot support 25 est muni dans ce but d'une chambre fermée 56 disposée sous la plaque métallique 49. Dans le cas représenté, une traction sur les soufflets étanches 57 peut augmenter le volume interne rempli d'air de ces chambres 56 de sorte qu'il s'y crée une dépression qui maintient les feuilles de verre. Chacun des soufflets 57 est muni d'une plaque supérieure 58 rigide sur laquelle agit une tige de traction 59. Une biellette 61 agit sur les tiges 59 par l'intermédiaire d'une barre de liaison 60. Au poste de chargement A, après dépôt du volume, un organe de commande à poste fixe agit sur un levier 62 pour mettre la biellette 61 dans la position qui crée la dépression. Au poste de déchargement E, des poussoirs de commande disposés à cet emplacement pour faire cesser la dépression placent de même les leviers de commande 62, dans leur position finale opposée.

Sur les chariots supports représentés par la figure 4, la plaque porteuse est aussi constituée d'une plaque métallique 49 pourvue d'ouvertures 51 et recouverte d'une couche 50 constituée d'un matériau élastomère. Les ouvertures 52 dans la couche 50 sont emplies d'une matière plastique à structure de mousse ou d'écume en caoutchouc garantissant que les volumes de verre seront supportés là aussi.

Dans ce cas, la mise en oeuvre de la dépression pour fixer les vitrages se produit pneumatiquement. Le chariot support 25 est à nouveau muni d'une chambre de mise sous vide 66 où la dépression peut être surveillée à l'aide du manomètre 67. Une conduite 68 relie la chambre 66, par l'intermédiaire d'une soupape anti-retour 69 de retenue de la pression, au couplage rapide 70 qui, au poste de chargement A, se raccorde à une pompe à vide centrale par une pièce antagoniste 71 correspondante placée à poste fixe. Le réservoir 66 y est ainsi mis sous vide après dépôt du volume de verre, tandis qu'au poste de déchargement E la soupape de mise à l'air 72, commandée par un poussoir 73, permet d'enlever le volume par mise à l'air du réservoir 66 à travers la conduite 74.

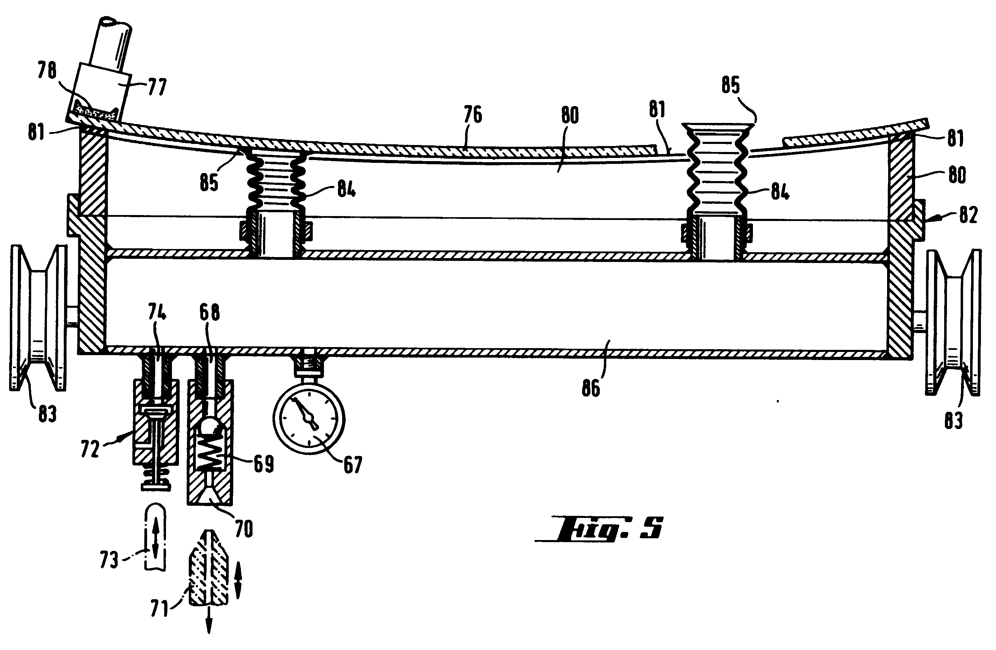

La figure 5 représente un mode d'exécution d'un chariot support adapté, par exemple, à une ligne de fabrication dans laquelle un volume bombé 76 est garni le long de son bord d'un cordon profilé 78 qu'une buse d'extrusion 77 élabore à partir d'une masse adhésive durcissable. Une telle ligne de fabrication comprend en règle générale trois postes de travail, à savoir un premier où l'on nettoie la zone marginale du volume à revêtir, un deuxième où le bord reçoit une couche de primaire d'adhésion, et un troisième où le profilé 78 est déposé sur la feuille de verre à l'aide d'une buse d'extrusion 77.

Le volume de verre 76 repose alors non sur une plaque support par la totalité de la surface mais au contraire le long de son pourtour par l'intermédiaire d'un cadre porteur 80. La face du cadre porteur 80 qui se trouve au contact du volume 76 est ajustée à la forme de celui-ci et pourvue d'une couche élastique 81. Le cadre porteur 80 repose sur le chariot support 82 où il peut être échangé contre d'autres cadres porteurs de forme différente. Le chariot 82 est pourvu de galets 83 qui courent sur des rails correspondants.

Sur les chariots supports 82 sont disposés des dispositifs de succion à l'aide desquels le vitrage 76 est attiré contre le cadre 80. Fondamentalement les dispositifs de succion peuvent avoir toute structure désirée. Ainsi, il peut s'agir par exemple de ventouses qu'un vérin pneumatique fait reculer aussitôt qu'elles sont entrées en prise sur le volume 76. Dans le cas représenté sur le dessin, les dispositifs de succion sont constitués de soufflets 84 à plis élastiques ouverts vers le haut, possédant une lèvre élastique souple 85 en caoutchouc et reliés à la chambre de mise sous vide 86. Lorsque le cadre porteur 80 se trouve à l'état libre, les extrémités des soufflets 84 dépassent par leur lèvre 85 au-dessus de la surface porteuse du cadre porteur 80. Aussitôt que le vitrage 76 repose sur le cadre 80, il y est mis en position d'une façon appropriée. Ensuite, la chambre 86 est mise en dépression par l'intermédiaire de la soupape 69. Ainsi les soufflets 84 s'appliquent par succion sur le volume 76 puis, s'écrasant sous l'effet de la dépression, l'attirent contre le cadre porteur 80. La mise à l'air de la chambre 86 au poste de déchargement se produit par l'intermédiaire de la soupape de mise à l'air 72 de la manière décrite en liaison avec la figure 4.

Comme il a déjà été indiqué, le positionnement précis du chariot support à un poste de travail est d'une particulière importance quand il faut y exécuter une opération de haute précision.

A cette fin, une caractéristique importante des chariots supports réside dans l'aménagement de surfaces et/ou de points de centrage qui permettent de placer chacun d'eux aux différents postes de travail avec la même précision. L'ajustement du chariot support peut, selon le mode d'exécution, être obtenu par des surfaces ou des points de contact, ou même sans contact.

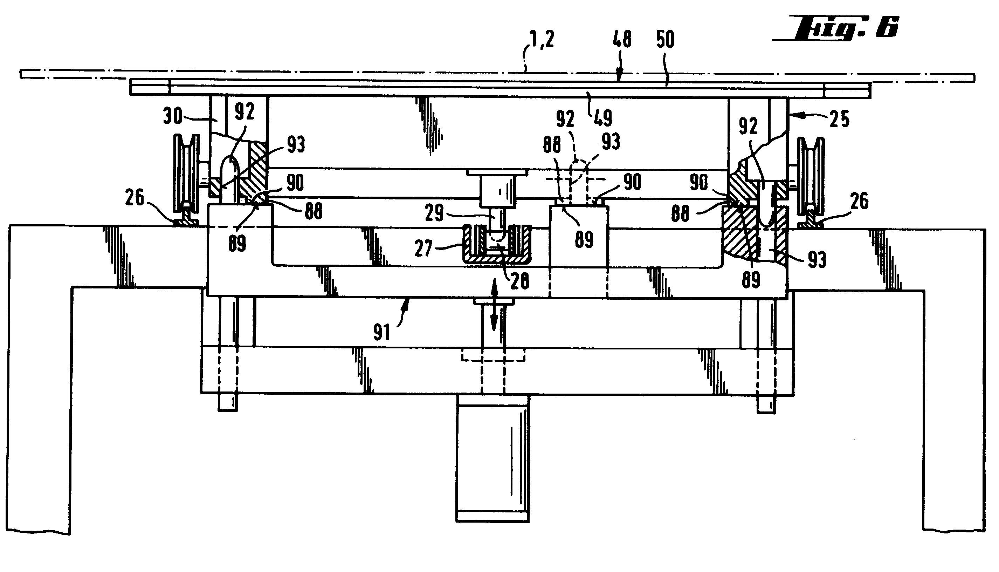

Un exemple d'ajustement par des surfaces de contact est représenté à la figure 6. Sur la face inférieure du chariot support 25 sont disposés d'une part des éléments de butée 88 ayant des faces de butée horizontales 89 qui coopèrent au poste de travail avec des portées de butée correspondantes 90 appartenant à un organe de centrage 91 qui, après l'arrivée du chariot porteur, se soulève de la hauteur souhaitée. Des piges de centrage 92 font prise à l'extérieur dans des alésages de centrage correspondants 93, de sorte que la mise en place s'effectue dans les trois dimensions avec la précision désirée.

## Revendications

1. Procédé pour fabriquer des vitrages au sein d'une ligne comprenant plusieurs postes de travail (A, B, C, D, E) successifs, notamment une ligne de découpe en forme et de meulage de volumes de verte ou une ligne de travail et de manutention de vitrages bombés, procédé au cours duquel on dépose et fixe dans une position déterminée chacun des volumes à son entrée sur ligne sur un support mobile de manière à éviter tout mouvement relatif entre les deux pièces puis dans lequel on centre ou positionne chacun des supports mobiles par rapport aux postes de travail qu'ils traversent pas à pas, les volumes étant liés à leurs supports par aspiration, **caractérisé en ce que** chaque support est un chariot support constituant un unique organe de transport sur lequel le volume reste sans déplacement relatif à travers toute la ligne, **en ce que** le volume repose sur le support au moins le long du pourtour de ce support **et en ce que** pendant le travail et/ou la manutention, le volume n'est immobilisé que par aspiration sur son chariot support par l'intermédiaire de dispositifs d'aspiration disposés à l'intérieur de ce pourtour.

2. Dispositif pour fabriquer des vitrages au sein d'une ligne comprenant plusieurs phases de travail, notamment pour la découpe en forme et le meulage de volumes de verre, comprenant successivement plusieurs postes de travail (A, B, C, D, E) des volumes de verre (1, 2 ; 76), un système d'acheminement desdits volumes à travers ladite ligne de fabrication qui comporte une série de supports mobiles pour prendre en charge lesdits volumes, les supports étant équipés comme moyens pour fixer les volumes par rapport à eux, d'une chambre (56 ; 66 ; 86) susceptible d'être mise en dépression pour exercer par des ouvertures (51 ; 85) une succion sur le volume, et de moyens pour centrer ou positionner les volumes par rapport à chacun des postes de travail qu'ils traversent pas à pas, **caractérisé en ce que** les supports sont des chariots supports (25) constituant un unique organe de transport sur lequel le volume reste sans déplacement relatif, **en ce qu'**ils sont équipés de moyens de positionnement du chariot support lui-même (25) à un poste de travail, **et en ce qu'**ils comportent une surface porteuse (48 ; 80) s'étendant au moins le long du pourtour du volume (1, 2 ; 76) et à l'intérieur de laquelle débouchent lesdites ouvertures (51 ; 85).

3. Dispositif pour fabriquer des vitrages au sein d'une ligne comprenant plusieurs phases de travail selon la revendication 2, notamment pour la découpe en forme et le meulage de volumes de verte, **caractérisé en ce que** ladite surface porteuse est une plaque plane de surface petite que celle des volumes de sorte que leur zone marginale à traiter déborde à l'extérieur.

4. Dispositif pour fabriquer des vitrages au sein d'une ligne comprenant plusieurs phases de travail selon la revendicaiiton 2, pour le travail ou la manutention de volumes de verte, **caractérisé en ce que** le support possède un cadre porteur (80) adapté à la forme d'un volume **et en ce que** les moyens pour fixer les volumes sont constitués de ventouses placées à l'intérieur du cadre.

5. Dispositif selon la revendication 4, **caractérisé en ce que** les ventouses possèdent une surface de succion rétractable.

6. Dispositif selon l'une des revendications 2 à 5, **caractérisé en ce que**, sur la chambre dépressionnaire, sont disposés des soufflets dont le volume peut se modifier sous l'action d'une commande mécanique et qui sont mis par des poussoirs dans l'une de leurs positions extrêmes opposées, au poste de chargement (A), et dans l'autre, au poste de déchargement (E).

7. Dispositif selon l'une des revendications 2 à 6, **caractérisé en ce que**, la chambre susceptible d'être mise en dépression (66 ; 86) est munie d'un couplage rapide (70) possédant une soupape de retenue de la pression (69) et coopérant au poste de chargement (A) avec une pièce antagoniste correspondante (71), et une soupape de mise à l'air (72) commandée par un poussoir (73) au poste de déchargement (E).

8. Dispositif selon l'une des revendications 2 à 7, **caractérisé en ce que** les moyens de positionnement du support (25) à un poste de travail comprennent un organe élévateur de centrage (91) muni de piges (92) ou d'alésages de centrage (93) qui coopèrent avec des alésages ou des piges de centrage correspondants placés sur le support (25).

9. Dispositif selon la revendication 8, **caractérisé en ce que** l'organe élévateur de centrage (91) et le support (25) présentent l'un et l'autre une surface de butée horizontale (89, 90) pour justifier le support en direction verticale.

10. Dispositif selon lune des revendications 2 à 9, comprenant un poste de découpe en forme, **caractérisé en ce qu'**à ce poste de découpe en forme (B) existe une table élévatrice équipée de faces porteuses (40, 44) qui, en position haute, supporte le bord du volume (1, 2) débordant au-delà de la plaque porteuse (48) du support (25) et qui, en position basse, permet le déplacement du support (25).

11. Dispositif selon la revendication 10, **caractérisé en ce que** la table élévatrice est constituée d'une partie externe (37) munie de faces porteuses (44) et de faible course et d'une partie interne (36) munie de faces porteuses (49) de course plus importante.

## Claims

1. Method for manufacturing glazing panes within a line comprising several successive work stations (A, B, C, D, E), notably a line for cutting to shape and grinding volumes of glass or a line for working and handling curved glazing panes, a method during which there is deposited and fixed, in a given position, each of the volumes at its entry to the line on a movable support so as to prevent any relative movement between the two pieces and then in which each of the movable supports is aligned or positioned with respect to the work stations which they pass through in a stepping fashion, the volumes being connected to their supports by suction, characterised in that each support is a supporting carriage constituting a single transportation device on which the volume remains without relative movement throughout the line, in that the volume rests on the support least along the periphery of the support and in that, during the working or handling, the volume is immobilised only by suction on its supporting carriage by means of suction devices disposed inside this periphery.

2. Device for manufacturing glazing panes within a line comprising several working phases, notably for the cutting to shape and grinding of volumes of glass, comprising successively several work stations (A, B, C, D, E) for the volumes of glass (1, 2; 76), a system for routing the said volumes through the said manufacturing line which includes a series of movable supports for taking over the said volumes, the supports being equipped as means for fixing the volumes with respect to them, a chamber (56; 66; 86) able to be put at negative pressure in order to exert, through openings (51; 85), a suction on the volume, and means for aligning or positioning the volumes with respect to each of the work stations which they pass through in a stepping fashion, characterised in that the supports are support carriages (25) constituting a single transportation device on which the volume remains without relative movement, in that they are equipped with means of positioning the support carriage itself (25) on a work station, and in that they have a carrier surface (48; 80) extending at least along the periphery of the volume (1, 2; 76) and inside which the said openings (51; 85) open out.

3. Device for manufacturing glazing panes within a line comprising several work phases according to Claim 2, notably for the cutting to shape and grinding of volumes of glass, characterised in that the said carrier surface is a flat plate with a smaller surface area than that of the volumes so that their marginal area to be processed projects outwards.

4. Device for manufacturing glazing panes within a line comprising several work phases according to Claim 2, for working or handling volumes of glass, characterised in that the support has a carrier frame (80) adapted to the shape of a volume and in that the means for fixing the volumes consist of suckers placed inside the frame.

5. Device according to Claim 4, characterised in that the suckers have a retractable suction surface.

6. Device according to one of Claims 2 to 5, characterised in that, on the negative-pressure chamber, bellows are disposed whose volume can be modified under the action of a mechanical control and which are set by pushers, in one of their opposite extreme positions, at the loading station (A) and, in the other, at the unloading station (E).

7. Device according to one of Claims 2 to 6, characterised in that the chamber able to be depressurised (66; 86) is provided with a rapid coupling (70) having a pressure retaining valve (69) and cooperating at the loading station (A) with a corresponding opposing piece (71), and a valve for opening to atmosphere (72) controlled by a pusher (73) at the unloading station (E).

8. Device according to one of Claims 2 to 7, characterised in that the means of positioning the support (25) at a work station comprise an alignment lifting member (91) provided with rods (92) or alignment bores (93) which cooperate with corresponding alignment bores or rods placed on the support (25).

9. Device according to Claim 8, characterised in that the alignment lifting member (91) and the support (25) each have a horizontal abutment surface (89, 90) for justifying the support in the vertical direction.

10. Device according to one of Claims 2 to 9, comprising a station for cutting to shape, characterised in that, at this station for cutting to shape (B) there is a lifting table equipped with carrier faces (40, 44) which, in the upper position, supports the edge of the volume (1, 2) projecting beyond the carrier plate (48) of the support (25) and which, in the bottom position, allows the movement of the support (25).

11. Device according to Claim 10, characterised in that the lifting table consists of an external part (37) provided with carrier faces (44) and with a short travel, and an internal part (36) provided with carrier faces (49) with a longer travel.

## Patentansprüche

1. Verfahren zum Herstellen von Fensterscheiben innerhalb einer mehrere aufeinanderfolgende Bearbeitungsstationen umfassenden Linie, insbesondere einer Linie zum Formschneiden und Schleifen von Glasscheiben oder einer Linie zum Bearbeiten und Handhaben von gebogenen Glasscheiben, bei dem jede Scheibe beim Eintritt in die Linie in einer bestimmten Position auf einem beweglichen Träger derart abgelegt und fixiert wird, daß jede Relativbewegung der beiden Teile vermieden wird und dann jeder der beweglichen Träger bezüglich der schrittweise durchlaufenen Bearbeitungsstationen zentriert oder positioniert wird, wobei die Scheiben durch Unterdruck mit ihren Trägern verbunden sind, **dadurch gekennzeichnet,** daß jeder Träger ein Trägerwagen ist, der ein einzelnes Transportorgan bildet, auf dem die Scheibe beim Durchlaufen der ganzen Linie ohne Relativbewegung aufliegt, und daß die Scheibe auf dem Träger zumindest auf dessen gesamtem Umfang aufliegt und während der Bearbeitung oder Handhabung nur durch Unterdruck mittels im Innenraum dieses Umfangs verteilter Saugvorrichtungen auf ihrem Trägerwagen festgelegt ist.

2. Vorrichtung zum Herstellen von Fensterscheiben innerhalb einer mehrere aufeinanderfolgende Arbeitsphasen umfassenden Bearbeitungslinie, insbesondere einer Linie zum Formschneiden und Schleifen von Glasscheiben, umfassend mehrere aufeinanderfolgende Bearbeitungsstationen (A, B, C, D, E) der Glasscheiben (1, 2; 76), ein System zum Fördern der besagten Scheiben durch die besagte Bearbeitungslinie, welches eine Reihe von beweglichen Trägern zum Aufnehmen der besagten Scheiben umfaßt, wobei die Träger jeweils als Mittel zum Fixieren der Scheiben auf den Trägern mit einer unter Unterdruck setzbaren Kammer (56; 66; 86), die durch Öffnungen (51; 85) eine Saugwirkung auf die Scheibe ausübt, und mit Mitteln zum Zentrieren oder Positionieren der Scheiben bezüglich jeder der schrittweise durchlaufenen Bearbeitungsstationen ausgestattet sind, **dadurch gekennzeichnet,** daß die Träger Trägerwagen (25) sind, die ein einzelnes Transportorgan bilden, auf dem die Scheibe ohne Relativverschiebung aufliegt,
daß sie mit Mitteln zum Positionieren der Trägerwagen (25) selbst in einer Bearbeitungsstation ausgestattet sind, und daß sie eine Trägerfläche (48; 80) umfassen, die sich zumindest entlang dem Umfang der Scheibe (1, 2; 76) erstreckt und in deren Innenraum die besagten Öffnungen (51; 85) ausmünden.

3. Vorrichtung zum Herstellen von Fensterscheiben innerhalb einer mehrere aufeinanderfolgende Arbeitsphasen umfassenden Bearbeitungslinie nach Anspruch 2, insbesondere zum Formschneiden und Schleifen von Glasscheiben, **dadurch gekennzeichnet,** daß die besagte Trägerfläche eine flache Platte mit kleinerer Oberfläche als die Scheiben ist, so daß deren zu bearbeitende Randzone nach außen übersteht.

4. Vorrichtung zum Herstellen von Fensterscheiben innerhalb einer mehrere aufeinanderfolgende Arbeitsphasen umfassenden Bearbeitungslinie nach Anspruch 2, insbesondere zum Bearbeiten oder Handhaben von Glasscheiben, **dadurch gekennzeichnet,** daß der Träger einen an die Form einer Scheibe angepaßten Tragrahmen (80) besitzt und daß die Mittel zum Fixieren der Scheiben aus Saugvorrichtungen bestehen, die im Inneren des Rahmens angeordnet sind.

5. Vorrichtung nach Anspruch 4, **dadurch gekennzeichnet,** daß die Saugvorrichtungen eine zurückziehbare Saugfläche aufweisen.

6. Vorrichtung nach einem der Ansprüche 2 bis 5, **dadurch gekennzeichnet,** daß in der Unterdruckkammer Bälge angeordnet sind, die durch mechanische Betätigung ihr Volumen ändern können und die durch Stößel in der Beladestation (A) in eine ihrer Extremstellungen und in der Entladestation (E) in die andere, entgegengesetzte Extremstellung bringbar sind.

7. Vorrichtung nach einem der Ansprüche 2 bis 6, **dadurch gekennzeichnet,** daß die unter Unterdruck setzbare Kammer (66; 86) mit einer Schnellkupplung (70) versehen ist, die ein Druckhalteventil (69) umfaßt, welches in der Beladestation (A) mit einem entsprechenden Gegenstück (71) zusammenwirkt, und ein Belüftungsventil (72) umfaßt, das in der Entladestation (E) durch einen Stößel (73) betätigt wird.

8. Vorrichtung nach einem der Ansprüche 2 bis 7, **dadurch gekennzeichnet**, daß die Mittel zum Positionieren des Trägers (25) in einer Bearbeitungsstation eine mit Zentrierstiften (92) oder Zentrierbohrungen (93) versehene heb- und senkbare Zentriervorrichtung (91) umfassen, die mit entsprechenden Zentrierbohrungen oder Zentrierstiften auf dem Träger (25) zusammenwirken.

9. Vorrichtung nach Anspruch 8, **dadurch gekennzeichnet,** daß heb- und senkbare Zentriervorrichtung (91) und der Träger (25) jeweils eine horizontale Anschlagfläche (89, 90) für die Justierung des Trägers in vertikaler Richtung aufweisen.

10. Vorrichtung nach einem der Ansprüche 2 bis 9 mit einer Formschneidestation, **dadurch gekennzeichnet,** daß in der Formschneidestation (B) ein absenkbarer und anhebbarer Tisch mit Auflageflächen (40, 44) vorgesehen ist, der in angehobener Stellung den über die Trägerplatte (48) des Trägers (25) überstehenden Randbereich der Scheibe (1, 2) abstützt und der in abgesenkter Stellung den Weitertransport des Trägers (25) ermöglicht.

11. Vorrichtung nach Anspruch 10, **dadurch gekennzeichnet,** daß der absenkbare und anhebbare Tisch aus einem Außenteil (37) mit Auflageflächen (44) und geringem Hub und aus einem Innenteil (36) mit Auflageflächen (49) und größerem Hub gebildet ist.
